(19) Europäisches Patentamt / European Patent Office / Office européen des brevets

(11) **EP 3 359 787 B1**

(12) **FASCICULE DE BREVET EUROPEEN**

(45) Date de publication et mention
de la délivrance du brevet:
**17.07.2019 Bulletin 2019/29**

(21) Numéro de dépôt: **16774532.2**

(22) Date de dépôt: **13.09.2016**

(51) Int Cl.:
***F01N 3/20*** *(2006.01)*     ***F01N 11/00*** *(2006.01)*

(86) Numéro de dépôt international:
**PCT/FR2016/052295**

(87) Numéro de publication internationale:
**WO 2017/060578 (13.04.2017 Gazette 2017/15)**

(54) **PROCEDE DE DIAGNOSTIC D'UN CATALYSEUR DE REDUCTION SELECTIVE DES OXYDES D'AZOTE**

VERFAHREN ZUR DIAGNOSE EINES KATALYSATORS ZUR SELEKTIVEN REDUKTION VON STICKOXIDEN

METHOD FOR DIAGNOSING A CATALYST FOR SELECTIVE REDUCTION OF NITROGEN OXIDES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2015 FR 1559574**

(43) Date de publication de la demande:
**15.08.2018 Bulletin 2018/33**

(73) Titulaire: **Renault S.A.S.**
**92100 Boulogne-Billancourt (FR)**

(72) Inventeurs:
• SELLAMI, Ali
  **75012 Paris (FR)**
• TRAD, Houcem
  **78180 Montigny Le Bretonneux (FR)**

(56) Documents cités:
**WO-A1-2007/037730**     **FR-A1- 2 952 673**
**US-A1- 2011 023 456**

**Description**

DOMAINE TECHNIQUE DE L'INVENTION

L'invention concerne un procédé de diagnostic d'un catalyseur de réduction sélective des oxydes d'azote monté à l'échappement d'un moteur à combustion interne. Elle concerne également un dispositif de motorisation comprenant un moteur à combustion interne fonctionnant en mélange pauvre et un catalyseur de réduction sélective des oxydes d'azote pour la mise en oeuvre d'un tel procédé. Elle trouve une application avantageuse sous la forme d'un procédé de contrôle embarqué dans un véhicule automobile équipé d'un tel dispositif de motorisation.

ETAT DE LA TECHNIQUE

De nombreux moteurs modernes à combustion interne, en particulier les moteurs diesel des véhicules automobiles, sont équipés à l'échappement d'un catalyseur de réduction sélective des oxydes d'azote, dit aussi catalyseur SCR (de l'acronyme en langue anglaise : Selective Catalytic Réduction).

De manière connue, un tel catalyseur SCR permet de réduire en molécules inoffensives pour l'environnement les molécules d'oxydes d'azote (NOx) émises dans les gaz de combustion du moteur, sous l'action de réducteurs injectés de manière continue à l'entrée du catalyseur SCR. Ces réducteurs sont généralement issus d'une solution d'urée aqueuse connue sous la dénomination commerciale Adblue®.

Un catalyseur SCR permet de diminuer les rejets dans l'atmosphère des émissions d'oxydes d'azote provenant des gaz de combustion d'un moteur, et de respecter les normes légales qui limitent les émissions à l'échappement d'espèces polluantes par les véhicules automobiles. Par exemple, la norme européenne dite « euro6 » limite les émissions d'oxydes d'azote des véhicules équipés d'un moteur diesel à 80 milligrammes par kilomètre parcouru, sur le cycle dit « NEDC ».

D'autre part, la législation oblige les véhicules automobiles à être équipés d'un système de diagnostic embarqué, dit aussi système de contrôle OBD (acronyme en langue anglaise pour : On Board Diagnostic), apte à vérifier de manière continue que les émissions polluantes ne dépassent pas les limites légales, et à signaler le cas échéant un tel dépassement au conducteur, typiquement par l'allumage d'un voyant au tableau de bord, pour que le conducteur puisse faire procéder à la remise en état du véhicule.

Un tel système de contrôle OBD surveille en outre le bon fonctionnement des différents composants du véhicule qui contribuent au respect des niveaux d'émissions polluantes, et il provoque l'allumage d'un voyant, dit voyant OBD, au tableau de bord du véhicule en cas de dépassement de ces niveaux. Ainsi, le conducteur du véhicule est alerté que le véhicule ne respecte plus la législation et il est incité à le faire remettre en état.

Le système de contrôle OBD contrôle notamment les composants qui participent à la formation des gaz de combustion à la sortie du moteur (vanne d'admission d'air, injecteurs de carburant, etc...) et les composants qui participent à la dépollution desdits gaz de combustion dans la ligne d'échappement.

Dans le cas d'un moteur diesel équipé d'un catalyseur SCR, le système de contrôle OBD surveille plus particulièrement les performances de traitement du catalyseur. Ces performances, qui peuvent se définir comme le rendement de la réaction de réduction des oxydes d'azote dans le catalyseur SCR, sont liées à la capacité de ce dernier à stocker l'ammoniac $NH_3$. Elles se dégradent avec le vieillissement, qui se manifeste par une perte irréversible de sites de stockage de l'ammoniac NH3 dans la structure du catalyseur pour réduire les oxydes d'azote $NO_x$. Il existe différentes méthodes de diagnostic des performances de traitement du catalyseur :

- certaines sont non intrusives : par exemple le document WO 2007/037730 divulgue un diagnostic de la réduction catalytique sélective SCR basé sur la comparaison de d'efficacité de traitement des oxydes d'azote $NO_x$ donnée par un capteur d'oxydes d'azote $NO_x$ avec une efficacité nominale sur un point de fonctionnement du moteur (régime, charge) donné. La détermination de l'efficacité nominale est réalisée selon l'équation :

$$(Equ.1) \qquad \varepsilon = (\ [NOx]_{in} - [NOx]_{out}) / [NOx]_{in}\ ,$$

équation dans laquelle

- $[NOx]_{in}$ désigne la concentration d'oxydes d'azote en amont du catalyseur SCR, et
- $[NOx]_{out}$ désigne la concentration d'oxydes d'azote en aval du catalyseur SCR.

Dans ce document, au moins la concentration d'oxydes d'azote en aval du catalyseur est mesurée par un capteur d'oxydes d'azote.

- d'autres méthodes de diagnostic des performances de traitement du catalyseur sont intrusives comme celles qui sont basées sur la détermination de la capacité de stockage d'ammoniac dite aussi ASC (acronyme anglais pour « Ammonia Storage Capacity), grandeur caractérisée par la masse maximale d'ammoniac ($NH_3$) stockable dans le catalyseur SCR, image de l'état du vieillissement du catalyseur SCR. La détermination de la capacité de stockage d'ammoniac est connue de plusieurs documents. Par exemple, la publication FR3007795-A1 divulgue un procédé dans lequel :

    - on vidange la masse d'ammoniac stockée dans le catalyseur,
    - on procède à une injection, en amont du catalyseur, d'une masse d'urée supérieure à la masse maximale pouvant être théoriquement stockée par le catalyseur,
    - on calcule par un modèle récursif la masse maximale stockée dans le catalyseur.

Dans un autre exemple, la publication FR2895447-A1 divulgue un procédé et un dispositif de surveillance d'un catalyseur SCR. Pour déterminer l'ASC, le procédé prévoit au moins une étape dans laquelle le taux d'agent réducteur est augmenté jusqu'à ce qu'un capteur sensible à l'ammoniac dans le système des gaz d'échappement installé en aval du catalyseur détecte un dégagement d'ammoniac. Un autre exemple est connue du document US2011/023456.

Or la première méthode de détermination de l'efficacité $\varepsilon$ de traitement du catalyseur SCR est imprécise et manque de répétabilité. La demanderesse a constaté qu'elle entraîne des risques de fausse détection (pièce non défaillante jugée défaillante) et de non détection (pièce défaillante jugée non défaillante), au regard de la finesse de détection liée aux normes de diagnostic les plus récentes. La seconde méthode de détermination d'ASC a pour inconvénient majeur d'être intrusive : plus précisément elle oblige à modifier les paramètres de fonctionnement du catalyseur, et elle génère des fuites toxiques d'ammoniac ($NH_3$) ainsi qu'une surconsommation d'urée.

RESUME DE L'INVENTION

Un des buts de l'invention est de remédier à au moins une partie des inconvénients de la technique antérieure en fournissant un procédé et un dispositif de contrôle de l'activation des diagnostics du catalyseur de réduction catalytique sélective des oxydes d'azote.

A cette fin, l'invention propose un procédé de diagnostic d'un catalyseur de réduction sélective des oxydes d'azote monté à l'échappement d'un moteur à combustion interne de véhicule automobile comportant au moins :

- une étape de détermination de l'efficacité de traitement du catalyseur par comparaison des concentrations d'oxydes d'azote en amont et en aval dudit catalyseur,
- une étape de comparaison de ladite efficacité avec un premier seuil d'efficacité,
- une étape dans laquelle le catalyseur est jugé défaillant lorsque ladite efficacité est inférieure audit premier seuil,

Ledit procédé étant caractérisé en ce qu'il comprend au moins des étapes dans lesquelles :

- on compare ladite efficacité avec un second seuil supérieur audit premier seuil,
- lorsque ladite efficacité est supérieure audit second seuil, on juge le catalyseur non défaillant,
- lorsque ladite efficacité est inférieure audit second seuil, on juge l'état de défaillance du catalyseur indéterminé puis on détermine la capacité de stockage d'ammoniac,
- on compare ladite capacité de stockage d'ammoniac obtenue à un seuil de capacité,
- on juge le catalyseur défaillant lorsque ladite capacité de stockage est inférieure audit seuil de capacité,
- on juge le catalyseur non défaillant lorsque ladite capacité de stockage est supérieure audit seuil de capacité.

Grâce à l'invention, le diagnostic du catalyseur est toujours fiable, les émissions d'ammoniac sont réduites au juste nécessaire et la consommation d'urée est limitée.

Selon une caractéristique avantageuse, l'efficacité est calculée comme le ratio de la différence de concentration d'oxydes d'azote en amont du catalyseur et la concentration d'oxydes d'azote en aval du catalyseur, divisé par la concentration d'oxydes d'azote en amont du catalyseur. Ce calcul ne nécessite aucune modification des paramètres de fonctionnement du catalyseur SCR et permet un calcul non intrusif, réalisable en tout instant.

Selon une autre caractéristique avantageuse, la concentration d'oxydes d'azote en aval du catalyseur est mesurée par un capteur.

Selon une autre caractéristique avantageuse, la concentration d'oxydes d'azote en amont du catalyseur est soit mesurée par un capteur, soit modélisée en fonction du point de fonctionnement du moteur, ce qui permet une réduction de coût et de volume occupé.

Selon une autre caractéristique avantageuse, le diagnostic de la capacité de stockage d'ammoniac (ASC) déterminant la masse maximale d'ammoniac stockée dans le catalyseur comprend les étapes suivantes :

- on vidange la masse d'ammoniac stockée dans le catalyseur,
- on procède à une injection, en amont de la réduction catalytique sélective, d'une masse d'urée supérieure à la masse maximale pouvant être théoriquement stockée par le catalyseur,
- on calcule par un modèle récursif la masse maximale stockée dans le catalyseur.

L'avantage de ce procédé intrusif est sa précision et sa robustesse.

Selon une autre caractéristique avantageuse, le premier seuil d'efficacité est sensiblement compris entre 20% et 30%; le second seuil d'efficacité est sensiblement compris entre 60% et 70% et lesdits seuils d'efficacité ainsi que le seuil de capacité de stockage d'ammoniac dépendent du point de fonctionnement du moteur, ce qui les rend facilement cartographiables.

L'invention concerne un dispositif de motorisation de véhicule automobile pour la mise en oeuvre du procédé de l'invention comprenant un moteur à combustion interne, et un catalyseur de réduction sélective des oxydes d'azote monté à l'échappement dudit moteur, caractérisé en ce que ledit dispositif comprend en outre au moins un moyen de mesure de la concentration d'oxyde d'azote en aval du système de réduction catalytique sélective et des moyens de détermination de la concentration d'oxydes d'azote en amont du système de réduction catalytique sélective. Ce dispositif présente des avantages analogues à ceux du procédé.

BREVE DESCRIPTION DES FIGURES

D'autres caractéristiques et avantages apparaîtront à la lecture d'un mode de réalisation préféré décrit en référence aux figures dans lesquelles:

- la figure 1 représente un exemple de dispositif de motorisation apte à la mise en oeuvre du procédé selon l'invention ; et,
- la figure 2 est un logigramme des étapes d'un procédé de contrôle du dispositif de motorisation conforme à l'invention.

DESCRIPTION DETAILLEE DES FIGURES

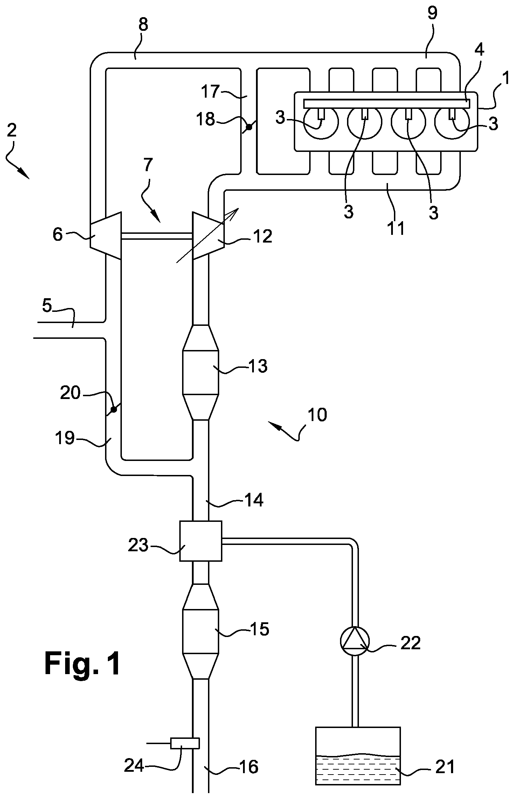

Selon un premier mode de réalisation de l'invention représenté à la **figure 1**, le dispositif de motorisation apte à la mise en oeuvre du procédé selon l'invention comprend un moteur 1 à combustion interne, par exemple un moteur diesel de véhicule automobile, qui se présente ici sous la forme d'un moteur à quatre cylindres en ligne suralimenté. Le moteur 1 est alimenté en air par un circuit d'admission d'air 2, et en carburant, par exemple du gazole, par une pluralité d'injecteurs 3 montés sur une rampe commune 4 d'alimentation en carburant.

Le circuit d'admission d'air 2 comporte d'amont en aval, c'est-à-dire dans le sens de circulation de l'air, une conduite d'admission d'air 5, un compresseur 6 d'un turbocompresseur 7 du moteur 1, une conduite de liaison compresseur - collecteur d'admission 8 et un collecteur d'admission 9. Bien entendu, le circuit d'admission 2 peut comporter d'autres composants non représentés ici, par exemple un filtre à air, un refroidisseur d'air suralimenté, une vanne de réglage du débit admis dans le collecteur d'admission 9, un débitmètre, etc.

Le moteur 1 est aussi équipé d'un circuit d'échappement 10 des gaz d'échappement, comprenant d'amont en aval, c'est-à-dire dans le sens de circulation des gaz, un collecteur d'échappement 11, une turbine 12 du turbocompresseur 7, un pot catalytique 13 comportant par exemple un catalyseur d'oxydation 13 et/ou un filtre à particules 13, une conduite de liaison 14 pot catalytique - catalyseur SCR, un catalyseur de réduction sélective des oxydes d'azote 15, dit aussi catalyseur SCR 15, et une conduite d'échappement 16.

La flèche représentée sur la turbine 12 signale qu'il s'agit d'une turbine dont les ailettes sont inclinables. En d'autres termes le turbocompresseur 7 se présente ici sous la forme d'un turbocompresseur 7 à géométrie variable. Bien entendu, dans une variante non représentée, le turbocompresseur 7 peut être un turbocompresseur à géométrie fixe. L'illustration proposée est celle d'un moteur turbocompressé mais cela pourrait aussi bien être un moteur à pression atmosphérique.

Le circuit d'échappement 10 comprend par ailleurs ici deux circuits de recirculation partielle des gaz d'échappement à l'admission : un premier circuit de recirculation partielle des gaz d'échappement à haute pression 17, dit aussi circuit EGR HP 17 (de l'acronyme en langue anglaise pour: Exhaust Gas Recycling) prend naissance en un point du circuit d'échappement 10 situé entre le collecteur d'échappement 11 et la turbine 12. Son autre extrémité débouche dans la conduite de liaison compresseur - collecteur d'admission 8. Il est équipé d'une vanne de recirculation partielle des gaz d'échappement à haute pression 18, dite aussi vanne EGR HP 18, dont le réglage permet d'ajuster la proportion de gaz recyclés à l'admission.

Un second circuit de recirculation des gaz d'échappement des gaz d'échappement à basse pression 19, dit aussi circuit EGR BP 19, prend naissance en aval du pot catalytique 13, en un point du circuit d'échappement situé sur la conduite de liaison 14 pot catalytique - catalyseur SCR. Son autre extrémité débouche dans la conduite d'admission d'air 5, en amont du compresseur 6. Il est équipé d'une vanne de recirculation partielle des gaz d'échappement à basse pression 20, dite aussi vanne EGR BP 20, dont le réglage permet d'ajuster la proportion de gaz recyclés.

Le catalyseur SCR est alimenté en agents réducteurs, provenant d'une solution d'urée aqueuse (Adblue®) à partir d'un réservoir 21. La solution est pompée par une pompe 22 et introduite en amont du catalyseur SCR 15 en un point de la conduite de liaison 14 pot catalytique - catalyseur SCR grâce à un dispositif d'introduction 23, par exemple un injecteur d'urée 23.

Le dispositif de motorisation comprend des moyens de détermination de la quantité de réducteurs (Adblue®) $V_{urée}$ disponible dans le réservoir 21, par exemple une jauge de niveau (non représentée) montée dans le réservoir. Il comprend également des moyens de comparaison de ladite quantité avec un stock minimum $V_{min}$.

En aval du catalyseur SCR 15 (dans le sens de circulation des gaz d'échappement), un capteur d'oxydes d'azote 24, dit capteur d'oxydes d'azote aval 24, permet de mesurer la concentration d'oxydes d'azote sortant $[NOx]_{out}$ du catalyseur SCR 15 après traitement et rejetés dans l'atmosphère extérieure. Ce capteur 24 est monté par exemple sur la conduite d'échappement 16.

Le dispositif de motorisation comprend aussi des moyens de contrôle (non représentés), par exemple un calculateur électronique, apte à régler les paramètres de fonctionnement du dispositif de motorisation, notamment du moteur 1 et du catalyseur SCR, en fonction d'une consigne de couple correspondant à un enfoncement de la pédale d'accélérateur par le conducteur du véhicule et à un régime donné. De manière connue en soi, le calculateur règle l'admission d'air et les quantités de gaz d'échappement à haute pression et/ou à haute pression recyclés à l'admission, l'injection de carburant dans le moteur, et le débit de la solution aqueuse de réducteurs injecté dans le catalyseur SCR 15.

Un second capteur d'oxydes d'azote (non représenté sur la figure), dit capteur d'oxydes d'azote amont, peut être monté sur la conduite de liaison 14 pot catalytique - catalyseur SCR en amont du dispositif d'introduction 23, pour mesurer la concentration d'oxydes d'azote entrant $[NOx]_{in}$ dans le catalyseur SCR 15. On peut aussi déterminer la concentration d'oxydes d'azote entrant dans le catalyseur par un modèle cartographié dans le calculateur en fonction du point de fonctionnement du moteur.

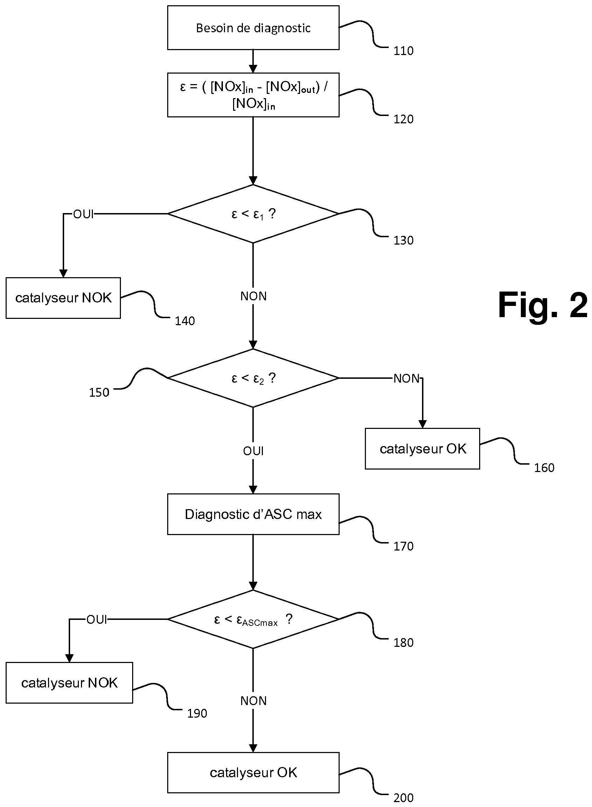

Sur la **figure 2** est représenté un logigramme en 10 étapes du procédé de contrôle du dispositif de motorisation selon un mode de réalisation de l'invention.

Le procédé débute par une étape 110 dans laquelle le calculateur déclenche une requête de diagnostic du catalyseur SCR. Cette étape est notamment conditionnée dans sa fréquence d'exécution par la norme de dépollution à considérer. En effet, avec Euro 6 les normes de diagnostic embarqué dites On Board Diagnostic (OBD) imposent des diagnostics fréquents des composants qui participent à la formation des gaz de combustion à la sortie du moteur et de ceux qui participent à la dépollution desdits gaz.

L'étape 120 est une étape d'estimation de l'efficacité du catalyseur par une méthode non intrusive et passive : plus précisément le calculateur comprend des moyens de détermination de l'efficacité $\varepsilon$ du catalyseur SCR selon l'équation :

$$(Equ.1) \qquad \varepsilon = (\ [NOx]_{in} - [NOx]_{out})\ /\ [NOx]_{in}\ ,$$

équation dans laquelle

- $[NOx]_{in}$ désigne la concentration d'oxydes d'azote entrant dans le catalyseur SCR 15, mesurée par le capteur d'oxydes d'azote amont, et
- $[NOx]_{out}$ désigne la concentration d'oxydes d'azote sortant du catalyseur SCR 15, mesurée par le capteur d'oxydes d'azote aval 24.

En variante, la concentration d'oxydes d'azote entrant dans le catalyseur SCR 15 peut aussi provenir, de manière classique, d'une cartographie archivée dans une mémoire du calculateur. Cette concentration résulte d'un modèle qui est fonction d'un ensemble de paramètres comprenant au moins le régime du moteur et le couple.

Cette étape 120 est non intrusive et passive, car le calculateur ne doit déclencher aucune modification des paramètres de fonctionnement courants du dispositif de motorisation pour pouvoir procéder au calcul, celui-ci pouvant être réalisé de manière continue.

A l'étape 130 on compare l'efficacité estimée $\varepsilon$ à un premier seuil $\varepsilon_1$ sensiblement compris entre 20% et 30% et dépendant du point de fonctionnement du moteur 1. Si l'efficacité estimée $\varepsilon$ est inférieure audit premier seuil $\varepsilon_1$ une

étape 140 d'identification du catalyseur SCR 15 comme défaillant est réalisée. Dans le cas contraire, une étape 150 de comparaison à un second seuil $\varepsilon_2$, sensiblement compris entre 60% et 70% et dépendant du point de fonctionnement du moteur 1, est réalisée. Si l'efficacité estimée $\varepsilon$ est supérieure audit second seuil $\varepsilon_2$ l'étape 160 d'identification du catalyseur SCR 15 comme non défaillant s'applique. Si au contraire l'efficacité $\varepsilon$ est inférieure au second seuil $\varepsilon_2$, c'est-à-dire quand elle est comprise entre le premier seuil $\varepsilon_1$ et le second seuil $\varepsilon_2$, on juge que l'état de défaillance du catalyseur est indéterminé puis on détermine à une étape 170 la capacité d'ammoniac ASC du catalyseur SCR 15 par la méthode suivante :

- on vidange la masse d'ammoniac stockée dans le catalyseur SCR 15,
- on procède à une injection, en amont du catalyseur SCR 15, d'une masse d'urée supérieure à la masse maximale pouvant être théoriquement stockée par le catalyseur SCR 15, jusqu'à l'obtention d'une fuite,
- on calcule par un modèle récursif la masse maximale stockée dans le catalyseur SCR 15. On se référera par exemple à la publication FR3007795 pour de détail du calcul.

L'étape 180 est une étape de comparaison de la capacité de stockage d'ammoniac ASC avec un seuil de capacité $ASC_s$ dépendant du point de fonctionnement du moteur 1. Si la capacité estimée ASC est inférieure audit seuil de capacité $ASC_s$ le catalyseur SCR est jugé défaillant à une étape 190. Dans le cas contraire il est jugé non défaillant à une étape 200. Le diagnostic d'ASC ainsi réalisé à partir de l'étape 170 permet ainsi de lever l'incertitude concernant l'état du catalyseur lorsque l'efficacité $\varepsilon$ est comprise entre le premier seuil $\varepsilon_1$ et le second seuil $\varepsilon_2$ d'efficacité. Contrairement au diagnostic d'efficacité réalisé jusqu'à l'étape 160, le diagnostic d'ASC est intrusif car il nécessite que le calculateur provoque plusieurs modifications lourdes des paramètres de fonctionnement du catalyseur SCR 15 à l'étape 170. A chaque fois qu'il doit être réalisé, il entraîne une surconsommation d'urée et des rejets d'ammoniac dans l'atmosphère. L'invention propose de ne déclencher ce diagnostic d'ASC que dans le cas où le diagnostic d'efficacité ne permet pas de déterminer l'état du catalyseur, de manière à limiter cette surconsommation d'urée et ces rejets.

**Revendications**

1. Procédé de diagnostic d'un catalyseur de réduction sélective des oxydes d'azote (15) monté à l'échappement (16) d'un moteur à combustion interne (1) de véhicule automobile comportant au moins :

    - une étape (120) de détermination de l'efficacité ($\varepsilon$) de traitement du catalyseur (15) par comparaison des quantités d'oxydes d'azote en amont et en aval dudit catalyseur (15),
    - une étape (130) de comparaison de ladite efficacité ($\varepsilon$) avec un premier seuil d'efficacité ($\varepsilon_1$),
    - une étape (140) dans laquelle le catalyseur (15) est jugé défaillant lorsque ladite efficacité ($\varepsilon$) est inférieure audit premier seuil ($\varepsilon_1$),

    Ledit procédé étant **caractérisé en ce qu'**il comprend au moins des étapes dans lesquelles :

    - on compare (150) ladite efficacité ($\varepsilon$) avec un second seuil ($\varepsilon_2$) supérieur audit premier seuil ($\varepsilon_1$),
    - lorsque ladite efficacité ($\varepsilon$) est supérieure audit second seuil ($\varepsilon_2$) on juge (160) le catalyseur (15) non défaillant,
    - lorsque ladite efficacité ($\varepsilon$) est inférieure audit second seuil ($\varepsilon_2$), on juge l'état de défaillance du catalyseur (15) indéterminé, puis on détermine (170) la capacité de stockage d'ammoniac,
    - on compare (180) ladite capacité de stockage d'ammoniac obtenue à un seuil de capacité ($ASC_s$),
    - on juge (190) le catalyseur (15) défaillant lorsque ladite capacité de stockage est inférieure audit seuil de capacité ($ASC_s$),
    - on juge (200) le catalyseur (15) non défaillant lorsque ladite capacité de stockage est supérieure audit seuil de capacité ($ASC_s$).

2. Procédé selon la revendication 1, **caractérisé en ce que** l'efficacité ($\varepsilon$) est calculée comme le ratio de la différence de concentration d'oxydes d'azote entre l'amont et l'aval dudit catalyseur (15), divisée par la concentration d'oxydes d'azote en amont dudit catalyseur (15).

3. Procédé selon l'une quelconque des revendications précédentes, **caractérisé en ce que** la concentration d'oxydes d'azote en aval dudit catalyseur (15) est mesurée par un capteur (24).

4. Procédé selon l'une quelconque des revendications précédentes, **caractérisé en ce que** la concentration d'oxydes d'azote en amont dudit catalyseur (15) est soit modélisée en fonction du point de fonctionnement moteur, soit mesurée par un capteur.

5. Procédé selon la revendication 1, **caractérisé en ce que** l'étape (170) de diagnostic de la capacité de stockage d'ammoniac (ASC$_s$) déterminant la masse maximale d'ammoniac stockée dans ledit catalyseur (15) comprend les étapes suivantes :

- on vidange la masse d'ammoniac stockée dans ledit catalyseur (15),
- on procède à une injection, en amont dudit catalyseur (15), d'une masse d'urée supérieure à la masse maximale pouvant être théoriquement stockée par ledit catalyseur (15),
- on calcule par un modèle récursif la masse maximale stockée dans ledit catalyseur (15).

6. Procédé selon la revendication 1, **caractérisé en ce que** :

- le premier seuil d'efficacité ($\varepsilon_1$) est sensiblement compris entre 20% et 30%;
- le second seuil d'efficacité ($\varepsilon_2$) est sensiblement compris entre 60% et 70% et
- lesdits seuils d'efficacité ($\varepsilon_1$), ($\varepsilon_2$) et le seuil de capacité de stockage d'ammoniac (ASC$_s$) dépendent du point de fonctionnement dudit moteur (1).

7. Dispositif de motorisation de véhicule automobile configuré pour la mise en oeuvre du procédé selon l'une quelconque des revendications 1 à 6, comprenant un moteur à combustion interne (1), et un catalyseur de réduction sélective des oxydes d'azote (15) monté à l'échappement (16) dudit moteur (1), **caractérisé en ce que** ledit dispositif comprend en outre au moins un moyen de mesure (24) de la concentration d'oxydes d'azote en aval du catalyseur et des moyens de détermination de la concentration d'oxydes d'azote en amont dudit catalyseur.

**Patentansprüche**

1. Verfahren zur Diagnose eines Katalysators zur selektiven Reduktion von Stickoxiden (15), der am Auspuff (16) eines Verbrennungsmotors (1) eines Kraftfahrzeugs montiert ist, umfassend mindestens:

- einen Schritt (120) des Bestimmens der Behandlungseffizienz ($\varepsilon$) des Katalysators (15) durch Vergleichen der Stickoxidmengen stromauf und stromab des Katalysators (15),
- einen Schritt (130) des Vergleichens der Effizienz ($\varepsilon$) mit einer ersten Effizienzschwelle ($\varepsilon_1$),
- einen Schritt (140), bei dem der Katalysator (15) als ausgefallen beurteilt wird, wenn die Effizienz ($\varepsilon$) unter der ersten Schwelle ($\varepsilon_1$) liegt,

wobei das Verfahren **dadurch gekennzeichnet ist, dass** es mindestens Schritte umfasst, bei denen man:

- die Effizienz ($\varepsilon$) mit einer zweiten Schwelle ($\varepsilon_2$) vergleicht (150), die über der ersten Schwelle ($\varepsilon_1$) liegt,
- wenn die Effizienz ($\varepsilon$) über der zweiten Schwelle ($\varepsilon_2$) liegt, den Katalysator (15) als nicht ausgefallen beurteilt (160),
- wenn die Effizienz ($\varepsilon$) unter der zweiten Schwelle ($\varepsilon_2$) liegt, den Ausfallzustand des Katalysators (15) als unbestimmt beurteilt, dann die Ammoniakspeicherkapazität bestimmt (170),
- die erhaltene Ammoniakspeicherkapazität mit einer Kapazitätsschwelle (ASC$_s$) vergleicht (180),
- den Katalysator (15) als ausgefallen beurteilt (190), wenn die Speicherkapazität unter der Kapazitätsschwelle (ASC$_s$) liegt,
- den Katalysator (15) als nicht ausgefallen beurteilt (200), wenn die Speicherkapazität über der Kapazitätsschwelle (ASC$_s$) liegt.

2. Verfahren nach Anspruch 1, **dadurch gekennzeichnet, dass** die Effizienz ($\varepsilon$) als Verhältniszahl für die Differenz zwischen der stromaufwärtigen und stromabwärtigen Stickoxidkonzentration des Katalysators (15), dividiert durch die Stickoxidkonzentration stromauf des Katalysators (15), berechnet wird.

3. Verfahren nach einem der vorhergehenden Ansprüche, **dadurch gekennzeichnet, dass** die Stickoxidkonzentration stromab des Katalysators (15) mit einem Sensor (24) gemessen wird.

4. Verfahren nach einem der vorhergehenden Ansprüche, **dadurch gekennzeichnet, dass** die Stickoxidkonzentration stromauf des Katalysators (15) entweder in Abhängigkeit von einem Motorbetriebspunkt modelliert wird oder mit einem Sensor gemessen wird.

5. Verfahren nach Anspruch 1, **dadurch gekennzeichnet, dass** der Schritt (170) der Diagnose der Ammoniakspeicherkapazität ($ASC_s$), bei dem die in dem Katalysator (15) gespeicherte maximale Ammoniakmenge bestimmt wird, die folgenden Schritte umfasst:

- man entleert die in dem Katalysator (15) gespeicherte Ammoniakmenge,
- man nimmt stromauf des Katalysators (15) eine Einspritzung einer Harnstoffmenge vor, die größer als die maximale Menge ist, die von dem Katalysator (15) theoretisch gespeichert werden kann,
- man berechnet mit einem rekursiven Modell die in dem Kondensator (15) gespeicherte maximale Menge.

6. Verfahren nach Anspruch 1, **dadurch gekennzeichnet, dass**:

- die erste Effizienzschwelle ($\varepsilon_1$) ungefähr zwischen 20 % und 30 % liegt;
- die zweite Effizienzschwelle ($\varepsilon_2$) ungefähr zwischen 60 % und 70 % liegt und
- die Effizienzschwellen ($\varepsilon_1$), ($\varepsilon_2$) und die Ammoniakspeicherkapazitätsschwelle ($ASC_s$) vom Betriebspunkt des Motors (1) abhängen.

7. Vorrichtung zur Motorisierung eines Kraftfahrzeugs, die zur Umsetzung des Verfahrens nach einem der Ansprüche 1 bis 6 ausgestaltet ist, umfassend einen Verbrennungsmotor (1) und einen Katalysator zur selektiven Reduktion der Stickoxide (15), der am Auspuff (16) des Motors (1) montiert ist, **dadurch gekennzeichnet, dass** die Vorrichtung ferner mindestens ein Messmittel (24) zum Messen der Stickoxidkonzentration stromab des Katalysators und Mittel zum Bestimmen der Stickoxidkonzentration stromauf des Katalysators umfasst.

## Claims

1. Method for the diagnosis of a catalyst for the selective reduction of nitrogen oxides (15) fitted to the exhaust (16) of a motor vehicle internal combustion engine (1) comprising at least:

- a stage (120) of determination of the effectiveness ($\varepsilon$) of treatment of the catalyst (15) by comparison of the amounts of nitrogen oxides upstream and downstream of the said catalyst (15),
- a stage (130) of comparison of the said effectiveness ($\varepsilon$) with a first effectiveness threshold ($\varepsilon_1$),
- a stage (140) in which the catalyst (15) is considered as failing when the said effectiveness ($\varepsilon$) is less than the said first threshold ($\varepsilon_1$),

the said method being **characterized in that** it comprises at least stages in which:

- the said effectiveness ($\varepsilon$) is compared (150) with a second threshold ($\varepsilon_2$) greater than said first threshold ($\varepsilon_1$),
- when the said effectiveness ($\varepsilon$) is greater than the said second threshold ($\varepsilon_2$), the catalyst (15) is considered (160) as non-failing,
- when the said effectiveness ($\varepsilon$) is less than the said second threshold ($\varepsilon_2$), the state of failure of the catalyst (15) is considered as indeterminate, and then the ammonia storage capacity is determined (170),
- the said ammonia storage capacity obtained is compared (180) with a capacity threshold ($ASC_t$),
- the catalyst (15) is considered (190) as failing when the said storage capacity is less than the said capacity threshold ($ASC_t$),
- the catalyst (15) is considered (200) as non-failing when the said storage capacity is greater than the said capacity threshold ($ASC_t$).

2. Method according to Claim 1, **characterized in that** the effectiveness ($\varepsilon$) is calculated as the ratio of the difference in concentration of nitrogen oxides between the upstream and the downstream of the said catalyst (15), divided by the concentration of nitrogen oxides upstream of the said catalyst (15).

3. Method according to either one of the preceding claims, **characterized in that** the concentration of nitrogen oxides downstream of the said catalyst (15) is measured by a sensor (24).

4. Method according to any one of the preceding claims, **characterized in that** the concentration of nitrogen oxides upstream of the said catalyst (15) is either modelled as a function of the engine operating point or measured by a

EP 3 359 787 B1

sensor.

5. Method according to Claim 1, **characterized in that** the stage (170) of diagnosis of the ammonia storage capacity ($ASC_t$) determining the maximum weight of ammonia stored in the said catalyst (15) comprises the following stages:

- the weight of ammonia stored in the said catalyst (15) is emptied,
- a weight of urea greater than the maximum weight which can be theoretically stored by the said catalyst (15) is then injected upstream of the said catalyst (15),
- the maximum weight stored in the said catalyst (15) is calculated by a recursive model.

6. Method according to Claim 1, **characterized in that**:

- the first effectiveness threshold ($\varepsilon_1$) is substantially between 20% and 30%;
- the second effectiveness threshold ($\varepsilon_2$) is substantially between 60% and 70% and
- the said effectiveness thresholds ($\varepsilon_1$), ($\varepsilon_2$) and the ammonia storage capacity threshold ($ASC_t$) depend on the operating point of the said engine (1).

7. Motor vehicle drive device configured for the implementation of the method according to any one of Claims 1 to 6, comprising an internal combustion engine (1) and a catalyst for the selective reduction of the nitrogen oxides (15) fitted to the exhaust (16) of the said engine (1), **characterized in that** the said device additionally comprises at least one means for measuring (24) the concentration of nitrogen oxides downstream of the catalyst and means for determining the concentration of nitrogen oxides upstream of the said catalyst.

9

**Fig. 1**

Fig. 2

Besoin de diagnostic — 110

$\varepsilon = ( [NOx]_{in} - [NOx]_{out}) / [NOx]_{in}$ — 120

$\varepsilon < \varepsilon_1$ ? — 130

OUI → catalyseur NOK — 140

NON

$\varepsilon < \varepsilon_2$ ? — 150

NON → catalyseur OK — 160

OUI

Diagnostic d'ASC max — 170

$\varepsilon < \varepsilon_{ASCmax}$ ? — 180

OUI → catalyseur NOK — 190

NON

catalyseur OK — 200

**EP 3 359 787 B1**

## RÉFÉRENCES CITÉES DANS LA DESCRIPTION

**Documents brevets cités dans la description**

- WO 2007037730 A
- FR 3007795 A1
- FR 2895447 A1
- US 2011023456 A
- FR 3007795